(19) Europäisches Patentamt
European Patent Office
Office européen des brevets

(11) **EP 1 379 835 B1**

(12) **EUROPÄISCHE PATENTSCHRIFT**

(45) Veröffentlichungstag und Bekanntmachung des Hinweises auf die Patenterteilung:
**20.08.2008 Patentblatt 2008/34**

(21) Anmeldenummer: **02747265.3**

(22) Anmeldetag: **09.04.2002**

(51) Int Cl.:
*G01C 3/32* ^(2006.01)    *G01C 11/02* ^(2006.01)

(86) Internationale Anmeldenummer:
**PCT/EP2002/003921**

(87) Internationale Veröffentlichungsnummer:
**WO 2002/084215 (24.10.2002 Gazette 2002/43)**

(54) **VERFAHREN ZUR AUTOMATISCHEN REGELUNG VON FOKUS UND BELEUCHTUNG, SOWIE ZUR OBJEKTIVIERTEN ANTASTUNG DES KANTENORTES IN DER OPTISCHEN PRÄZISIONSMESSTECHNIK**

METHOD FOR AUTOMATIC ADJUSTMENT OF FOCUS AND LIGHTING AND FOR OBJECTIVATED SCANNING OF EDGE SITE IN OPTICAL PRECISION MEASURING TECHNIQUE

PROCEDE DE REGLAGE AUTOMATIQUE DE LA DISTANCE FOCALE ET DE L'ECLAIRAGE, AINSI QUE DE DEMARRAGE OBJECTIVE DU PALPAGE DE LA POSITION D'ARETE DANS LA TECHNIQUE DE MESURE DE PRECISION OPTIQUE

(84) Benannte Vertragsstaaten:
**DE FR GB IT**

(30) Priorität: **18.04.2001 DE 10119026**
**18.08.2001 DE 10140640**

(43) Veröffentlichungstag der Anmeldung:
**14.01.2004 Patentblatt 2004/03**

(73) Patentinhaber: **Carl Zeiss Industrielle Messtechnik GmbH**
**73447 Oberkochen (DE)**

(72) Erfinder:
• **NEHSE, Uwe**
**98716 Geraberg (DE)**
• **LINSS, Gerhard**
**98529 Suhl (DE)**
• **KÜHN, Olaf**
**98528 Suhl (DE)**

(74) Vertreter: **Henckell, Carsten**
**Carl Zeiss**
**Patentabteilung**
**73446 Oberkochen (DE)**

(56) Entgegenhaltungen:
EP-A- 0 566 307       US-A- 5 193 124
US-A- 5 376 991       US-A- 5 978 027

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Optimierung der Zielgrößen für die optische Präzisionsmesstechnik durch Gewinnung von Hilfsparametem aus den Bildinformationen und Ableitung von Steuerinformationen für die Einflussgrößen.

Derartige Verfahren werden heute bereits in der Präzisionsmesstechnik an nachfolgend beschriebenen optischen Messverfahren eingesetzt. Beispielsweise werden in der Präzisionsmesstechnik Videokameras mit einem eindimensionalem CCD-Chip oder einem zweidimensionalem CCD-Chip verwendet, über die ein zu vermessendes Werkstück oder Teile davon aufgenommen werden können. Wenn die Videokamera relativ zu dem zu vermessenden Werkstück in einer oder mehreren Dimensionen beweglich gelagert ist, beispielsweise wenn die Videokamera als Sensor in einem Koordinatenmessgerät eingesetzt wird, können auch mehrere unterschiedliche Ausschnitte des zu vermessenden Werkstückes aufgenommen werden und dann geometrisch in Relation zueinander gebracht werden. Aus den Grauwertdifferenzen des aufgenommenen Bildes, die an den Strukturen eines zu vermessenden Werkstückes, wie insbesondere an den Kanten, entstehen, kann dann der 2D-Strukturort ermittelt werden. Hierüber kann in zwei Dimensionen das Werkstück oder einzelne Merkmale hiervon, wie beispielsweise Bohrungen, vermessen werden.

Die Bestimmung vom Strukturort aus den Grauwerten ist jedoch insbesondere dann nicht ohne weiteres möglich, wenn das zu vermessende Werkstück mit Auflicht beleuchtet wird. Für eine eindeutige Bestimmung eines 2D-Strukturortes, wie insbesondere einer Kante, sollte die Werkstückoberfläche nämlich eine gleichmäßige Helligkeit aufweisen. Tatsächlich jedoch hebt die Beleuchtung mit Auflicht die Strukturen auf der Oberfläche des zu vermessenden Werkstückes hervor, so dass keine symmetrischen Intensitätsverläufe entstehen. Damit müssen bei der Bildauswertung Hilfsparameter gewonnen werden, die als sogenannte Kantenortskriterien bezeichnet werden, anhand derer ein Strukturort, insbesondere eine Kante, als gegeben festgestellt wird. Ein solches Kantenortskriterium ist beispielsweise ein sogenanntes differentielles Kantenortskriterium, das einen Strukturort dann als gegeben feststellt, wenn die Grauwertdifferenzen nebeneinanderliegender Bildpunkte eine maximale Änderung aufweisen. Ein anderes Kantenortskriterium ist das sogenannte Schwellwertkriterium, das einen Strukturort, insbesondere eine Kante dann als gegeben feststellt, wenn sich die Grauwerte eines Bildelementes in einem vorgegebenen Bereich befinden.

Sollen nicht nur zweidimensionale Merkmale, wie beispielsweise die Außenabmessungen einer Leiterplatte, bestimmt werden, sondern eine vollständige Geometriebestimmung in allen drei Dimensionen vorgenommen werden, so ist neben der lateralen zweidimensionalen Bildinformation die Raumzuordnung über die Abstandsinformation zwischen der Videokamera und der Werkstückoberfläche notwendig. Diese Abstandsinformation der Werkstückoberfläche zur Videokamera kann mit Hilfe von Fokusverfahren gewonnen werden. Hierzu muss jedoch der Fokus der Videokamera automatisiert auf die Werkstückoberfläche eingestellt werden. Hierzu sind unterschiedliche sogenannte Fokuskriterien bekannt. Ein derartiges Kriterium ist beispielsweise der Kontrast des durch die Videokamera aufgenommenen Bildes. Wenn dieser Maximal ist, wird angenommen, dass sich die Oberfläche des zu vermessenden Werkstückes im Fokus befindet. Andere Kriterien sind beispielsweise die Grauwertdifferenzen zwischen unterschiedlichen Bildelementen oder der Mittelwert aller Graubildwerte oder die Standardabweichung der Graubildwerte.

Es ist also Ziel in den angegebenen Messverfahren, die Lage der Kante und/oder den Abstand der Werkstückoberfläche zur Videokamera so exakt wie möglich zu bestimmen, um das Werkstück so genau wie möglich vermessen zu können. Damit müssen also die Zielgrößen 2D-Strukturort und/oder Fokusort optimiert werden. Diese Zielgrößen variieren jedoch mit unterschiedlichen Einflussgrößen. Einflussgrößen, die auf die Zielgröße 2D-Strukturort einwirken, sind beispielsweise die Helligkeit, die Wellenlänge oder die Lage einer Beleuchtung, die ein zu vermessendes Werkstück beleuchtet. Besonders schwierig gestaltet sich dies insbesondere, wenn mehre unterschiedliche Beleuchtungen vorhanden sind.

Eine andere Einflussgröße, die auf die Zielgröße 2D-Strukturort einwirkt ist das Kantenortskriterium. Eine Einflussgröße, die auf den Fokusort einwirkt, ist beispielsweise die Wahl eines geeigneten Fokuskriteriums.

In der Vergangenheit wurden die Steuerinformationen für die Einflussgrößen, also z.B. die Steuerinformation für die unterschiedlichen Helligkeiten mehrerer Beleuchtungen, die Wahl eines geeigneten Kantenortskriteriums oder die Wahl eines geeigneten Fokuskriteriums vom Programmierer des Messablaufes subjektiv aus den Videobildern der Videokamera abgeleitet. Der Programmierer des Messablaufes hat hierbei auf Basis eines Videobildes der Kamera, das von einem Monitor wiedergegeben wurde, die Beleuchtungen so verstellt und/oder ein Fokuskriterium und/oder ein Kantenortskriterium derart ausgewählt, dass seiner subjektiven Einschätzung nach eine optimale Vermessung des betreffenden Kantenortes möglich schien.

Mit anderen Worten besteht *bei* solchen *optischen Inspektionssytemen und Koordinatenmessgerätenfür den Bediener die Aufgabe, die Beleuchtungsverhältnisse unter Berücksichtigung der optischen Eigenschaften des Messobjektes derart anzupassen, dass eine Fokussierung und Gewinnung von Antastpunkten (Geometrieantastung) mit höchster Genauigkeit und Wiederholbarkeit möglich ist. Dazu ist durch den Bediener eine Auswahl des Fokuskriteriums sowie des Antastverfahrens (Kantenortskriterium) zur Ermittlung des Strukturortes entsprechend den Eigenschaften des Messobjektes und den Beleuchtungsverhältnissen erforderlich. Die Qualität der ermittelten Ergebnisse hängt*

*demzufolge von der Erfahrung des Messtechnikers ab.*

Nachteilig an dieser herkömmlichen Vorgehensweise ist hierbei, dass die Einstellung der Einflussgrößen alleine an die Fähigkeiten des Programmierers gekoppelt ist und insbesondere eine optimale Wahl der Einflußgrößen praktisch nicht möglich war.

Die EP 0 566 307 A2 zeigt eine automatische Fokusregelung, bei der nur ein einziges Fokuskriterium verwendet wird, nämlich die mittlere Helligkeit des Bildes, die im Fokus maximal wird. Um festzustellen, in welche Richtung eine den Fokus verstellende Linse bewegt werden muss, wird die mittlere Helligkeit in mehreren unterschiedlichen Frequenzbändern bestimmt. Die Helligkeitsmesswerte der unterschiedlichen Frequenzbänder zweier benachbarter Stellungen der Linse werden dann mathematisch so weiterverarbeitet, dass die Richtung ermittelt werden kann, in die die Linse bewegt werden muss, um in den Fokus zu gelangen.

Das Dokument EP 0 606 018 A1 zeigt eine Vorrichtung zur automatischen Einstellung des Fokus einer Videokamera. Hierin wird ebenfalls nur ein Fokuskriterium "Kontrast" aus den Bilddaten abgeleitet, wobei der Verlauf dieses Fokuskriteriums einmal in horizontaler Bildrichtung ermittelt wird und zum anderen in vertikaler Bildrichtung ermittelt wird. Die beiden Verläufe des Fokuskriteriums werden separat daraufhin ausgewertet, an welcher Linsenposition diese maximal werden. Die Ergebnisse werden an einen sogenannten Lens Controller gegeben, der die Position der Objektivlinsen verstellen kann. Führt einer der Verläufe zu keinem brauchbaren Ergebnis, wird der Fokus nur auf Basis des anderen Verlaufes vom Lens Controller eingestellt. Führen hingegen beide Verläufe zu einem Ergebnis, so wird der Fokus auf Basis eines der beiden Verläufe eingestellt.

Im Patent DE 34 20 359 C2 ist eine Lichtregelung für ein Bildlesegerät (Scanner) beschrieben. Diese beruht auf der Auswertung des digitalen Bildes, bei dem gleichzeitig eine Abschattungkorrektur vorgenommen wird. Die hierin beschriebene Regelung ist aufgrund der völlig anderen Anforderungen, die bei der Vermessung eines Strukturortes in der optischen Präzisionsmesstechnik notwendig sind, nicht brauchbar.

Die EP 0 016 122 A1 beschreibt eine automatische Belichtungsregelung für eine Fernsehkamera, bei der die in die Fernsehkamera einfallende Lichtmenge durch pulsförmiges öffnen und schließen eines Shutters geregelt wird. Auch die hierin beschriebene Belichtungsregelung ist aufgrund der völlig anderen Anforderungen, die bei der Vermessung eines Strukturortes in der optischen Präzisionsmesstechnik notwendig sind, nicht brauchbar.

Des weiteren wurde am 5. Oktober 2001 die Dissertationsschrift mit dem Titel Beleuchtungs-und Fokusregelungen für die objektivierte optische Präzisionsantastung in der Koordinatenmessung - Edition Wissenschaft, Unterbereich Maschinenbau, von Uwe Nehse, Tectum Verlag Marburg, 2001, ISBN 3-8288-1207-4 nachveröffentlicht, in der wesentliche Bestandteile der Erfindung veröffentlicht sind.

Hiervon ausgehend liegt unserer Erfindung die Aufgabe zugrunde ein Verfahren anzugeben, mit dem beson-ders vorteilhaft automatisiert Steuerinformationen für die Einflussgrößen erzeugt werden können.

Die Aufgabe wird durch ein Verfahren gemäß den Merkmalen des unabhängigen Anspruches 1 gelöst, wie auch durch ein entsprechendes Präzisionsmessgerät gemäß unabhängigem Anspruch 7.

Die Besonderheit der Erfindung ist hierbei darin zu sehen, wie die Steuerinformationen für die Einflussgrößen, abgeleitet werden.

Zur Bestimmung der Steuerinformationen werden zunächst Verläufe der Hilfsparameter in Abhängigkeit von einer oder mehreren Einflussgrößen bestimmt. Die Verläufe der Hilfsparameter werden hierbei so bestimmt, dass die Verläufe ein gleichartiges Extremum der funktionalen Abhängigkeit von der Einflussgröße besitzen, das heißt also, dass entweder alle Verläufe im Optimum ein Maximum aufweisen oder alle Verläufe im Optimum ein Minimum aufweisen. Soweit dies bei einzelnen Hilfsparametern nicht unmittelbar möglich ist, kann ein gleichartiges Extremum der funktionalen Abhängigkeit von der Einflussgröße durch Differenzbildung eines ermittelten Wertes mit einem Vorgabewert erfolgen.

Es soll an dieser Stelle ausdrücklich darauf hingewiesen werden, dass es sich hierbei um die Verläufe wenigstens zweier unterschiedlicher Hilfsparameter handelt, die nach unterschiedlichen Verfahren ermittelt werden, also beispielsweise Kontrast, Homogenität, mittlere Helligkeit und/oder Anstieg. Nicht gemeint sind hingegen unterschiedliche Verläufe gleicher Hilfsparameter, die beispielsweise für unterschiedliche Bildbereiche oder unterschiedliche Frequenzbänder ermittelt werden, wie dies EP 0 606 018 A1 oder EP 0 566 307 A2 zeigen.

In einem nächsten Schritt wird der Gesamtverlauf der Hilfsparameter in Abhängigkeit von der Einflussgröße bzw. den Einflussgrößen durch gewichtete Summation der einzelnen Verläufe der Hilfsparameter bestimmt.

Danach wird ein Extremum, also ein Maximum oder ein Minimum des Gesamtverlaufes der Hilfsparameter bestimmt.

In einem letzten Schritt wird der zugehörige Wert der Einflussgröße am Ort des bestimmten Extremums als Steuerinformation für die Einflussgröße bestimmt. Diese Steuerinformation definiert, wie die Einflussgröße eingestellt werden soll.

Die Wichtungsfaktoren für die gewichtete Summation der Verläufe der Hilfsparameter können unterschiedlich gewählt und prinzipiell experimentell ermittelt werden. Besonders vorteilhaft werden diese jedoch so gewählt, dass eine Normierung aller Hilfsparameter erfolgt. Hierdurch kann weitgehend sichergestellt werden, dass der Verlauf jedes Hilfsparameters zum Ergebnis beiträgt.

Um die Anzahl der auszuwertenden Bildpunkte und damit die Auswertezeit zu reduzieren, können in der Bildinformation eine oder mehr Auswertungslinien erzeugt werden, die sich beidseits der zu vermessenden Struktur erstrekken. Aus den Auswertungslinien können dann für die jeweils für die betreffende Steuerinformation notwendigen Verläufe der Hilfsparameter ermittelt werden. Obwohl dies nicht zwingend erforderlich ist, stehen die Auswertungslinien dennoch vorteilhaft im wesentlichen lotrecht zur Struktur.

Die Bildinformation, anhand derer die Hilfsparameter bestimmt werden, wird üblicherweise unmittelbar von der Bildaufnahmevorrichtung zur Vermessung des Werkstückes, also in aller Regel von einer Videokamera bereitgestellt. Alternativ kann die Ermittlung der Hilfsparameter, insbesondere für Einflussgrößen der Beleuchtung, vorteilhaft auch aus simulierten Bildinformationen erfolgen, die mit Beleuchtungsmodellen der Computergrafik erzeugt werden.

Besonders vorteilhaft betrifft wenigstens eine der Einflussgrößen die Beleuchtung, da gerade hierfür, anders als bei der Regelung des Fokusorts, bislang überhaupt keine brauchbaren Hilfsparameter zur Verfügung standen, mit denen eine optimale Einstellung der Beleuchtungen in der optischen Präzisionsmesstechnik möglich gewesen wäre. Die Ermittlung eines Pararnetersatzes der Reflektions- und Transmissionseigenschaften, der auch als bidirektionale Reflektanzfunktion bezeichnet wird, ermöglicht besonders Vorteilhaft die Bestimmung des Verlaufes von geeigneten Hilfsparametem.

Als wichtige Einflußgrösse der Beleuchtung, für die Steuerparameter abgeleitet werden können, ist die Helligkeit der Beleuchtungen zu nennen. Als weitere Einflussgrößen sind die Wellenlänge zu nennen, mit der die Beleuchtungen das Werkstück beleuchten und der Ort, von dem aus die Beleuchtungen das Werkstück beleuchten.

Durch Hilfsparameter, deren Verlauf aus Bildpunkten, die beidseitig der zu messenden Struktur, vorzugsweise auf einer Auswertungslinie, angeordnet sind, lassen sich gut auswertbare Verläufe der Hilfsparameter für die Einflussgrössen der Beleuchtung erzielen. Vorteilhaft ist die Anzahl der ausgewerteten Bildpunkte auf der einen Seite des Struktur etwa gleich der Anzahl der auf der anderen Seite des Struktur ausgewerteten Bildpunkte.

Für die Bestimmung des Verlaufes der Hilfsparameter, aus denen ein Steuerparameter für die Einflussgröße für die Beleuchtung abgeleitet werden kann, müssen eine Vielzahl von Bildern aufgenommen werden, wobei in jedem Bild jeweils eine andere Beleuchtungseinstellung, also eine andere Einstellung der Helligkeit, der Wellenlänge und/oder des Ortes einer der Beleuchtungen eingestellt werden muss. Um diese Bildinformationen zur Ermittlung des Verlaufes der Hilfsparameter möglichst schnell erzielen zu können, kann von einer Kamera eine Bildsequenz mit einer synchronisiert steuerbaren Beleuchtungsquelle aufgenommen werden, wobei zwischen den Bildern die Beleuchtungseinstellung geändert wird.

In einer anderen besonders vorteilhaften Ausführungsform betrifft wenigstens eine der Einflussgrößen den potentiellen Strukturort. An dieser Stelle soll kurz auf den Unterschied zwischen den Begriffen "Struktur" und "Kante" eingegangen werden. Eine Kante ist lediglich ein Spezialfall einer Struktur. Dies soll an einem kurzen Beispiel verdeutlicht werden. Beispielsweise kann mit der optischen Präzisionmesstechnik der Übergang zweier aneinanderstoßender Materialien (z.B. Kupfer und Graphit) gemessen werden, wenn diese unterschiedliche optische Eigenschaften aufweisen. Obwohl keine Kante vorliegt, kann dennoch ein Strukturort festgestellt werden.

In einer weiteren vorteilhafte Ausführungsform betrifft wenigstens eine Einflussgröße die Linsenposition des Objektives der Bildaufnahmevorrichtung, mit der der Fokus des Objektives verstellt werden kann.

Die Erfindung soll nunmehr anhand der Figuren beschrieben werden. Hierin zeigen:

Figur 1:   Ein Koordinatenmessgerät auf dem ein erfindungsgemäßes Verfahren ausgeführt werden kann

Figur 2:   Ein rein schematischer Meßaufbau zur optischen Vermessung eines Werkstückes

Figur 3a:   Eine rein schematische Darstellung eines Videobildes, das mit dem Messaufbau gemäß Figur 2 aufgenommen wurde

Figur 3b:   Das Videobild gemäß Figur 3a, in das Auswertungslinien 14a,14b...14g eingefügt wurden

Figur 4:   Eine rein schematische Darstellung eines normierten Grauwertverlaufes im Bereich der Kante Ka gemäß Figur 3a

Figur 5:   Eine rein schematische Darstellung der Winkelverhältnisse zwischen Lichtquelle 10b und Videokamera 5

Figur 6:   Eine rein schematische Darstellung des Verlaufes zweier Fokuskriterien

Figur 7:   Eine rein schematische Darstellung des Verlaufes zweier Kantenkriterien

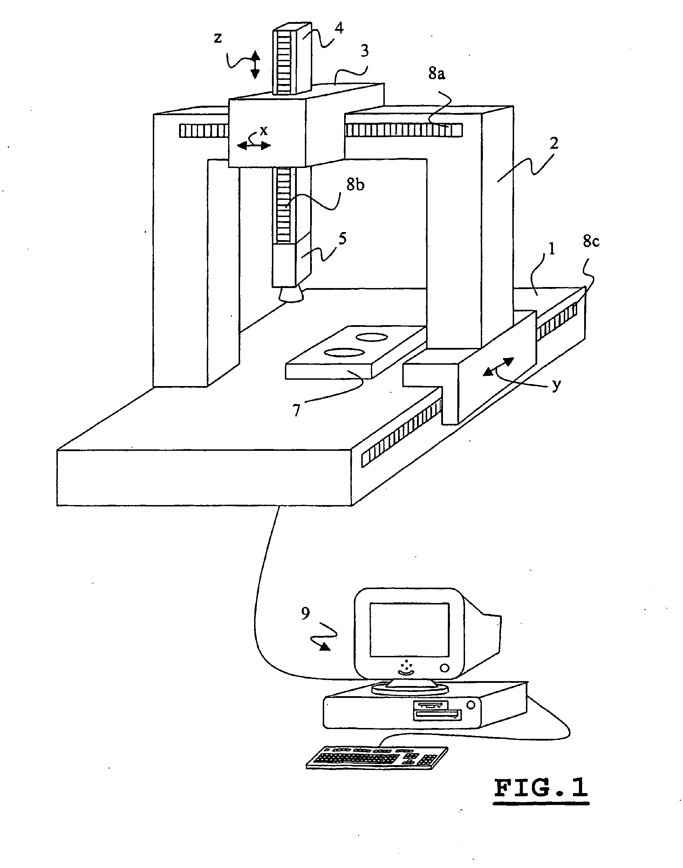

Figur 1 zeigt rein beispielhaft ein Präzisionsmessgerät in Form eines Koordinatenmessgerätes, mit dem das erfindungsgemäße Verfahren ausgeführt werden kann. Dieses weist einen Messtisch 1 auf, auf dessen Oberfläche ein zu vermessendes Werkstück 7 gelagert werden kann. Entlang der Messtischoberfläche ist ein Portal 2 in der mit dem Pfeil y bezeichneten Richtung beweglich geführt, wobei die jeweilige Position des Portals in der mit dem Pfeil y bezeichneten Richtung durch einen hier nicht sichtbaren Ablesekopf ermittelt werden kann, der den Maßstab 8c abtastet. Zusätzlich ist ein Antrieb vorgesehen.

Entlang dem den Messtisch 1 überspannenden Teil des Portals 2 ist ein Schlitten 3 in der mit dem Pfeil x bezeichneten Richtung beweglich geführt, wobei dessen Position ebenfalls durch Abtasten eines Maßstabes 8a ermittelt werden kann und der Schlitten ebenfalls durch einen Antrieb bewegt werden kann. An dem Schlitten 3 wiederum ist in der mit dem Pfeil z bezeichneten Richtung eine Pinole 4 beweglich geführt, deren Position durch Abtasten des an der Pinole 4 befestigten Maßstabes 8b bestimmt werden kann. Die Pinole kann ebenfalls motorisch angetrieben werden. Am unteren Ende der Pinole 4 ist als Meßsensorik eine Videokamera 5 befestigt, mit der die obere Oberfläche des zu vermessenden Werkstückes 7 optisch abgetastet werden kann. Die Videokamera 5 weist neben den üblichen Einrichtungen zur Aufnahme eines Bildes, wie dem Objektiv und einem CCD-Chip, zusätzlich in das Gehäuse der Videokamera 5 integrierte Beleuchtungen bzw. Lichtquellen auf, über die das Werkstück 7 beleuchtet werden kann.

Zum Verfahren der Videokamera 5 in den drei Koordinatenrichtungen x,y,z ist ein Rechner 9 vorgesehen, der dazu die Antriebe für das Portal 2, den Schlitten 3 und die Pinole 4 ansteuert. Außerdem dient der Messrechner zum Auswerten der von den Maßstäben 8a,8b,8c abgetasteten Positionswerten und als Bildauswertevorrichtung zur Auswertung der von der Videokamera 5 gelieferten Bildinformationen, um hieraus Messergebnisse auswerten zu können.

In einer vorteilhaften Ausgestaltung eines Koordinatenmessgerätes kann die Videokamera 5 über eine sogenannte Dreh-Schwenkeinheit an der Mechanik befestigt sein. Eine solche Dreh-Schwenkeinheit weist zwei senkrecht aufeinander stehende Drehgelenke auf. Durch Verdrehung um diese Drehgelenke kann zusätzlich die Raumlage der Videokamera 5 verändert werden, so dass bezogen auf das Koordinatenmessgerät gemäß Figur 1 auch die vertikalen Seitenflächen des Werkstückes 7 mit der Videokamera 5 abgetastet werden können.

Es versteht sich, dass das hier gezeigte Koordinatenmessgerät rein beispielhaft ausgestaltet ist. Beispielsweise könnte anstelle der hier gezeigten Portalmechanik eine andere Mechanik verwendet werden, um die Videokamera relativ zum Werkstück in den drei Koordinatenrichtungen bewegen zu können. Beispielsweise könnte eine sogenannte Ständermechanik vorgesehen sein. Wesentlich für ein Koordinatenmessgerät ist lediglich, dass die die Meßsensorik, hier die Videokamera 5, relativ zum Werkstück 7 in den drei Koordinaten x,y,z bewegt werden kann.

Anstelle eines Koordinatenmessgerätes kann für einfachere Messaufgaben, wie beispielsweise die Vermessung von Leiterplatinen, natürlich auch ein sehr viel einfacheres Präzisionsmessgerät verwendet werden, bei dem die Videokamera 5 nur in zwei Koordinatenrichtungen oder nur in einer Koordinatenrichtung oder sogar gar nicht relativ zum Werkstück bewegt werden kann.

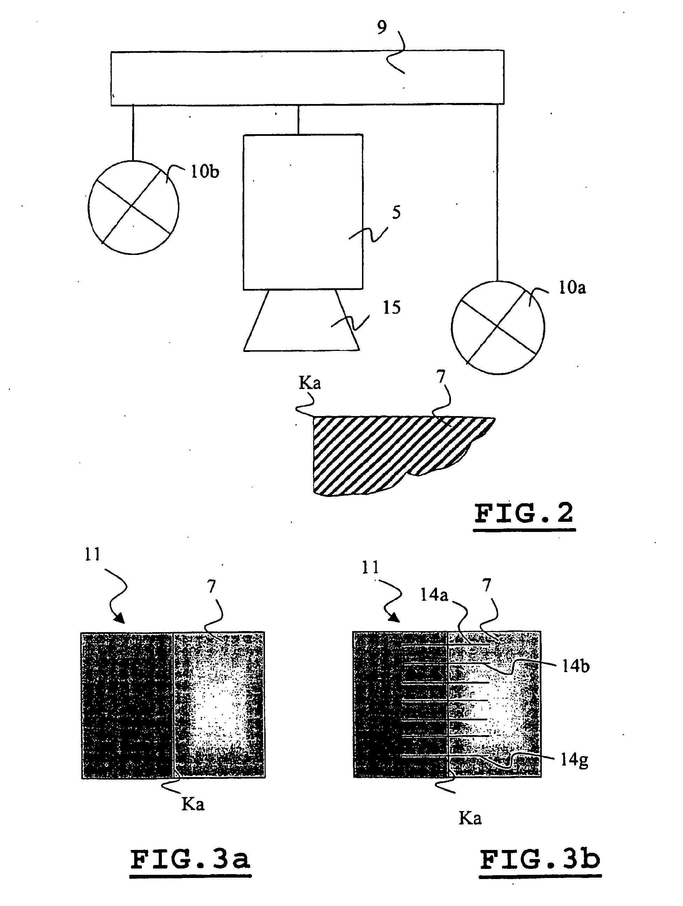

Das Antasten eines Werkstückes 7 mit einer Videokamera soll hierbei im Zusammenhang mit den rein schematischen Figuren 2, 3a und 3b dargestellt werden.

Figur 2 zeigt hierbei rein schematisch wesentliche Komponenten, die zur Durchführung des erfindungsgemäßen Verfahrens notwendig sind. Es sind hierin das zu vermessende Werkstück 7 gezeigt, bei dem beispielhaft die Kante Ka vermessen werden soll. Die Kante Ka wird hierbei von der Videokamera 5 beobachtet, wobei das Werkstück 7 von zwei Lichtquellen bzw. Beleuchtungen 10a und 10b beleuchtet wird. Natürlich reicht prinzipiell auch eine Beleuchtung. Gleichfalls können auch mehr als zwei Beleuchtungen vorgesehen sein. Die Videokamera 5, wie auch die Beleuchtungen 10a, 10b sind hierbei mit dem Rechner 9 verbunden. Der Rechner 9 kann hierbei, neben einer Reihe von anderen Funktionen unter anderem die Helligkeit der Beleuchtungen 10a,10b verändern, wie auch den Fokus des Objektives verstellen und die von der Videokamera 5 aufgezeichneten Bilddaten auswerten.

In Figur 3a ist hierbei ebenfalls rein schematisch ein Bild 11 der Videokamera 5 gezeigt. Wie hieraus ersichtlich, ist im rechten Bereich des Bildes 11 die von den Beleuchtungen 10a und 10b erhellte Oberfläche des Werkstücks 7 zu sehen. Links von der Kante Ka ist das Bild hingegen dunkel. Wie bereits Eingangs erwähnt, hebt die Beleuchtung mit Auflicht die Strukturen auf der Oberfläche des zu vermessenden Werkstückes 7 hervor, so dass keine symmetrischen Intensitätsverläufe entstehen.

Figur 3b zeigt ebenfalls das Bild 11 der Videokamera 5 gemäß Figur 3a, wobei zusätzlich entlang der Kante Ka sogenannte Auswertungslinien 14a, 14b...14g eingezeichnet sind, deren genaue Funktion noch weiter unten erläutert wird.

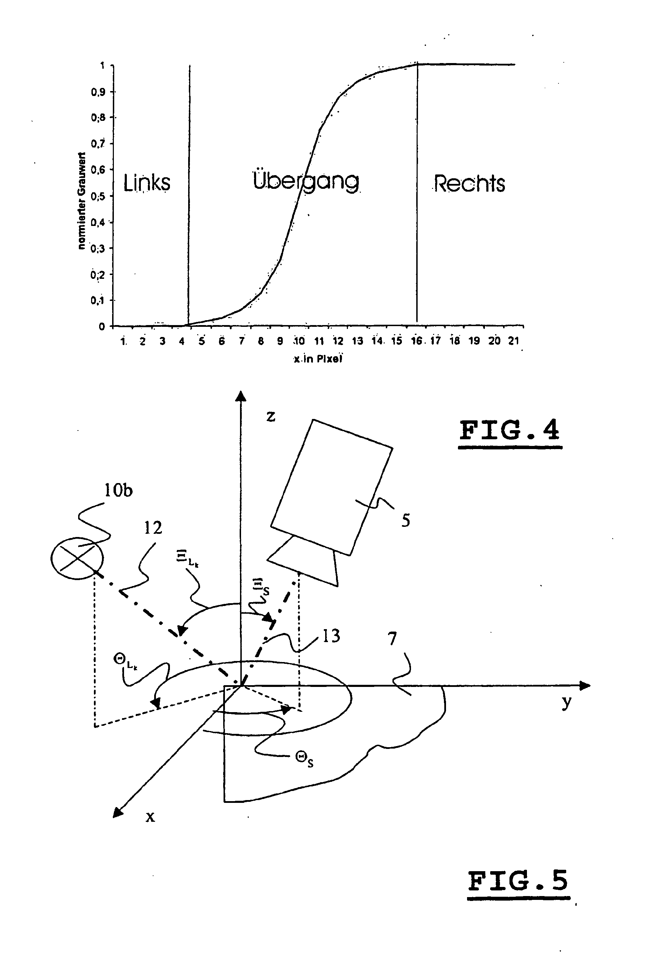

In Figur 4 ist hochauflösend der Intensitätsverlauf bzw. der Grauwertverlauf im Bereich der Kante Ka entlang der Auswertungslinie 14a gezeigt. *Aus diesem Intensitätsverlauf der abgebildeten Kante lassen sich Hilfsparameter ableiten, die die Zielgrößen der optischen Präzisionsmessung eindeutig beschreiben*, um hieraus Steuerparameter für die Einflußgrössen der Zielgrößen abzuleiten.

Das diesbezügliche Vorgehen soll für unterschiedliche Einflussgrößen näher erläutert werden.

### Regelung der Beleuchtung

Ein erster Komplex von Einflussgrößen der Zielgrösse "resultierende Ortsabweichung" sind Einflussgrößen, die die Beleuchtung des Werkstückes betreffen. Derartige Einflussgrößen, für die Steuerparameter bestimmt werden müssen, sind beispielsweise die Wellenlängen $\lambda$ mit denen die Beleuchtungen 10a und 10b das Werkstück beleuchten, der Ort der Beleuchtungen 10a und 10b und insbesondere die Helligkeit der Beleuchtungen 10a und 10b.

*Beispielsweise können dazu der Kontrast, die mittlere Helligkeit und die Störsignalamplitude im Bereich des Strukturübergangs* der Kante Ka *verwendet werden. Die Zielgrößen sind einerseits die Sicherheit und Robustheit bei der Antastung im Bild,* das heißt also, ob eine wiederholte Antastung des Werkstückes reproduzierbar sinnvolle Ergebnisse liefert *und die resultierende Ortsabweichung bei der Positionsbestimmung.* Als Zielgrösse, die die beiden eben genannten Zielgrössen implizit vereinigt, kann also insbesondere der 2D-Strukturort genannt werden. Wenn, wie weiter unten ausführlich beschrieben, zusätzlich auch der Abstand zwischen dem Sensor, hier der Videokamera 5 und der Werkstückoberfläche bestimmt wird, kann als Zielgrösse auch der 3D-Strukturort genannt werden.

Zur Bestimmung der Steuerinformationen müssen zunächst die Verläufe der Hilfsparameter in Abhängigkeit von einer oder mehreren Einflussgrößen bestimmt werden, wie dies im Folgenden rein beispielhaft für die Einflußgröße "Helligkeit" der Beleuchtungen 10a und 10b gezeigt werden wird.

Dazu muß zunächst *der Parametersatz der Reflexions- und Transmissionseigenschaften $p_{bdf}$,* der auch als bidirektionale Reflektanzfunktion bezeichnet wird, *durch Variation aller Beleuchtungskombinationen und Intensitätsauswertung im Bild ermittelt werden,* was über nachfolgende Gleichungen 1 und 2 geschieht:

$$\text{Gleichung 1: } p_{brdf_{li_{L_k}}}(\Theta_S, \Xi_S; \Theta_{L_k}, \Xi_{L_k}; \lambda_{L_k}; E_{L_k}) = \frac{I_{li_{L_k}}(\Theta_S, \Xi_S; \Theta_{L_k}, \Xi_{L_k}; E_{L_k}; \lambda_{L_k}) - I_{a_{li}}}{E_{L_k}(\Theta_{L_k}, \Xi_{L_k}; \lambda_{L_k})}$$

Hierin bedeuten:

$E_{L_k}$     Beleuchtungsstärkefunktion der Beleuchtung $L_k$

$p_{brdf_{li_{L_k}}}$     bidirektionale Reflektanzfunktion für einen Punkt links von der Kante Ka

$I_{li_{L_k}}$     Gesamtintensitätsfunktion für einen Punkt links von der Kante Ka, die sich aufgrund der Intensität $Ia_{li}$ der konstanten Umgebungshelligkeit und der Intensität aufgrund der Beleuchtung $L_k$ ergibt.

$I_{a_{ti}}$     konstante Intensität aufgrund der Umgebungshelligkeit links von der Kante Ka

$k$     Nummer der jeweiligen Beleuchtung

$L_k$     Beleuchtung Nummer k, also hier Beleuchtung 10a oder 10b

$\lambda_{L_k}$     Wellenlänge, mit der die Beleuchtung $L_k$ leuchtet

$\Theta_S$     Azimutwinkel des Sensors, hier also der Videokamera 5

$\Xi_S$     Elevationswinkel des Sensors, hier also der Videokamera 5

$\Theta_{L_k}$     Azimutwinkel der Beleuchtung $L_k$, hier also Beleuchtung 10a oder 10b

$\Xi_{L_k}$     Elevationswinkel der Beleuchtung $L_k$, hier also Beleuchtung 10a oder 10b

$$\text{Gleichung 2: } p_{brdf_{re_{L_k}}}(\Theta_S, \Xi_S; \Theta_{L_k}, \Xi_{L_k}; \lambda_{L_k}; E_{L_k}) = \frac{I_{re_{L_k}}(\Theta_S, \Xi_S; \Theta_{L_k}, \Xi_{L_k}; E_{L_k}; \lambda_{L_k}) - I_{a_{re}}}{E_{L_k}(\Theta_{L_k}, \Xi_{L_k}; \lambda_{L_k})}$$

Hierin bedeuten:

$p_{brdf_{reLk}}$     bidirektionale Reflektanzfunktion für einen Punkt rechts von der Kante Ka

$E_{L_k}$     Beleuchtungsstärkefunktion der Beleuchtung $L_k$

$I_{re_{L_k}}$     Gesamtintensitätsfunktion eines Bildpunktes rechts von der Kante Ka, die sich aufgrund der Intensität $Ia_{re}$ der konstanten Umgebungshelligkeit und der Intensität aufgrund der Beleuchtung $L_k$ ergibt.

$I_{a_{re}}$     konstante Intensität aufgrund der Umgebungshelligkeit rechts von der Kante KaDie restlichen Bezeichnungen stimmen mit den Bezeichnungen gemäß Gleichung 1 überein.

Der Azimutwinkel $\Theta_S$ und Elevationswinkel $\Xi_S$ der Videokamera 5, wie auch Azimutwinkel $\Theta_{L_k}$ und Elevationswinkel $\Xi_{L_k}$ der Beleuchtung $L_k$ (Beleuchtung $L_k$ ist hier beispielhaft die Beleuchtung 10b) sollen, obwohl diese im Zusammenhang mit dem weiter unten beschriebenen Ausführungsbeispiel keine weitere Rolle mehr spielen, dennoch anhand von Figur 5 kurz erläutert werden. Es handelt sich hierbei, wie aus Figur 5 ersichtlich, um die Kugelkoordinatenwinkel eines von der Lichtquelle 10b ausgesandten Lichtstrahls 12 und 13, der von einem auszuwertenden Punkt auf der Obefläche des Werkstückes 7 reflektiert wird, wobei der Ursprung des Koordinatensystems x,y,z sich in diesem auszuwertenden Punkt der Obefläche des Werkstückes befindet.

Gemäß Gleichung 1 wird die bidirektionale Reflektanzfunktion $p_{brdf_{li_{L_k}}}$ für einen Punkt links der Kante K bestimmt, während Gleichung 2 die bidirektionale Reflektanzfunktion $p_{brdf_{li_k}}$ für einen Punkt rechts der Kante K bestimmt.

*Bei der praktischen Umsetzung wird mit Hilfe* der steuerbaren *Lichtquellen bzw.* Beleuchtungen 10a und 10b *und* dem *Bildverarbeitungssystem*, das durch den Rechner 9 gebildet ist, *die Parametermatrix p_{bdrf} der Einflüsse der einzelnen Beleuchtungsquellen auf den zu untersuchenden Bereich ermittelt* ( bidirektionale Reflektanzfunktion).

Um die bidirektionale Reflektanzfunktion für einen Punkt auf der Werkstückoberfläche entweder links von der Kante oder rechts von der Kante ermitteln zu können, wird hierbei wie folgt vorgegangen.

Zunächst muß im Bild 11 der Ort der Kante Ka festgestellt werden. Dazu wird das Bild 11 der Kante Ka gemäß Figur 3a und 4 mit einer willkürlichen Helligkeitseinstellung der Beleuchtungen 10a und 10b aufgenommen. Aus diesen Bildinformationen wird dann grob über ein Kantenortskriterium die Lage der Kante Ka bestimmt. Dass die Lage der Kante Ka in Ermangelung optimaler Einstellungen der Einflussgrößen hierbei nur ungenau bestimmt wird, spielt hierbei keine Rolle. Ausgehend von der festgestellten Lage der Kante Ka werden dann auf beiden Seiten der Kante Ka eine vordefinierte Anzahl an Bildpunkten bzw. Pixeln des Bildes als Übergangsbereich definiert, wobei dann alle Pixel des Bildes 11 außerhalb des Übergangsbereiches auf der einen Seite der Kante Ka als links von der Kante Ka definiert werden und alle Bildpunkte bzw. Pixel des Bildes 11 außerhalb des Übergangsbereiches auf der anderen Seite der Kante Ka als rechts von der Kante Ka definiert werden, wie dies auch Figur 4 zeigt. Natürlich sind die Bezeichnungen links und rechts rein willkürlich und werden lediglich der Anschaulichkeit halber gewählt.

Zusätzlich werden hier beispielhaft gleichverteilt entlang des Verlaufes der Kante Ka die Auswertungslinien 14a, 14b...14g berechnet, wie dies Figur 3b darstellt. Diese Auswertungslinien werden alleine deshalb berechnet, damit künstlich definierte Bildbereiche generiert werden, entlang denen die betreffenden Bildpunkte des Bildes 11 ausgewertet werden können, um nicht alle Bildpunkte des Bildes 11 auswerten zu müssen. Natürlich müssen diese Auswertungslinien nicht gleichverteilt sein; vielmehr kann der Abstand der Linien beliebig variieren. Alternativ könnten auch, wenn dies gewünscht ist, alle Bildpunkte ausgewertet werden, wobei dann ganz auf die Linien verzichtet werden könnte.

In einem nächsten Schritt werden dann alle Beleuchtungen 10a und 10b ausgeschaltet und erneut durch die Videokamera 5 ein Bild aufgenommen. Durch Messung von Farbwerten oder Grauwerten in Bildbereichen rechts oder links der Kante Ka, können dann für den betreffenden auszuwertenden Bildbereich die Intensitäten $I_{a_{li}}$, $I_{a_{re}}$ aufgrund der Umgebungshelligkeit links oder rechts von der Kante Ka ermittelt werden.

Danach wird separat für jede Beleuchtung 10a und 10b schrittweise Helligkeit und damit die Beleuchtungsstärke erhöht und für jede eingestellte Beleuchtungsstärke erneut durch die Videokamera 5 ein Bild 11 aufgenommen. Durch Messung von Farbwerten oder Grauwerten in Bildbereichen rechts oder links der Kante Ka, können dann für den betreffenden auszuwertenden Bildbereich die Gesamtintensitäten links oder rechts von der Kante Ka, die sich aufgrund der Intensität $I_{a_{li}}$ bzw. $I_{a_{re}}$ der konstanten Umgebungshelligkeit und der Intensität aufgrund der Beleuchtung $L_k$ gemäß ergeben, gemessen werden. Betrachtet man die eingestellten Helligkeiten als Funktionswerte der Beleuchtungsstärkefunktion $E_{L_k}$ der betreffenden Beleuchtung und die gemessenen Gesamtintensitäten als Funktionswerte der Gesamtintensitätsfunktion $I_{li_{Lk}}$ bzw. $I_{re_{Lk}}$ so kann über Gleichung 1 oder 2 die bidirektionale Reflektanzfunktion $p_{brdf_{li_{L_k}}}$ bzw. $p_{brdf_{li_k}}$ bestimmt werden.

Aus der Beziehung gemäß Gleichung 1 lässt sich die Funktion der Gesamtintensität $I_{li}$ links vom Kantenort, die sich aufgrund der Intensität $I_{a_{li}}$ der Umgebungshelligkeit und der Summe der Intensitätsfunktionen der einzelnen Beleuchtungen k=1..n ergibt, wie folgt darstellen:

Gleichung 3:

$$I_{li}(\Theta_S, \Xi_S; \Theta_L, \Xi_L; E_L; \lambda_L) = I_{a_{li}} + \sum_{k=1}^{n} [E_{L_k}(\Theta_{L_k}, \Xi_{L_k}; \lambda_{L_k}) \cdot p_{brdf_{li_{L_k}}}(\Theta_S, \Xi_S; \Theta_{L_k}, \Xi_{L_k}; \lambda_{L_k}; E_{L_k})]$$

Analog läßt sich die Funktion der Gesamtintensität $I_{re}$ für einen Bildbereich rechts vom Kantenort wie folgt darstellen:

Gleichung 4:

$$I_{re}(\Theta_S,\Xi_S;\Theta_L,\Xi_L;E_L;\lambda_L) = I_{a_{re}} + \sum_{k=1}^{n}[E_{L_k}(\Theta_{L_k},\Xi_{L_k};\lambda_{L_k})\cdot p_{brdf_{re_{L_k}}}(\Theta_S,\Xi_S;\Theta_{L_k},\Xi_{L_k};\lambda_{L_k};E_{L_k})]$$

Unter Berücksichtigung von Gleichungen 3 und 4 kann aus den aufgenommenen Parametern nunmehr eine *Kontrast*funktion gemäß folgender *Gleichung 5* berechnet werden:

Gleichung 5:

$$K(\Theta_S,\Xi_S;\Theta_L,\Xi_L;E_L;\lambda_L) = |I_{li}(\Theta_S,\Xi_S;\Theta_L,\Xi_L;E_L;\lambda_L) - I_{re}(\Theta_S,\Xi_S;\Theta_L,\Xi_L;E_L;\lambda_L)|$$

$$= |\ I_{a_{li}} + \sum_{k=1}^{n}[E_{L_k}(\Theta_{L_k},\Xi_{L_k},\lambda_{L_k})\cdot p_{brdf_{li_{L_k}}}(\Theta_S,\Xi_S;\Theta_{L_k},\Xi_{L_k};\lambda_{L_k};E_{L_k})] -$$

$$\left\{I_{a_{re}} + \sum_{k=1}^{n}[E_{L_k}(\Theta_{L_k},\Xi_{L_k},\lambda_{L_k})\cdot p_{brdf_{re_{L_k}}}(\Theta_S,\Xi_S;\Theta_{L_k},\Xi_{L_k};\lambda_{L_k};E_{L_k})]\right\}\ |$$

$$= |I_{a_{li}} - I_{a_{re}}| + \sum_{k=1}^{n}[E_{L_k}(\Theta_{L_k},\Xi_{L_k};\lambda_{L_k})]\cdot|p_{brdf_{li}}(\Theta_S,\Xi_S;\Theta_{L_k},\Xi_{L_k};\lambda_{L_k};E_{L_k}) - p_{brdf_{re}}(\Theta_S,\Xi_S;\Theta_{L_k},\Xi_{L_k};\lambda_{L_k};E_{L_k})|$$

Unter Berücksichtigung von Gleichungen 3 und 4 kann ferner aus den aufgenommenen Parametern auch eine Funktion der *mittleren Helligkeit* $\bar{I}$ gemäß folgender *Gleichung 6* berechnet werden:

Gleichung 6:

$$\bar{I}(\Theta_S,\Xi_S;\Theta_L,\Xi_L;E_L;\lambda_L) = \frac{I_{li}(\Theta_S,\Xi_S;\Theta_L,\Xi_L;E_L;\lambda_L) + I_{re}(\Theta_S,\Xi_S;\Theta_L,\Xi_L;E_L;\lambda_L)}{2}$$

$$= \frac{1}{2}[I_{a_{li}} + I_{a_{re}}] + \sum_{k=1}^{n}[E_{L_k}(\Theta_{Lk},\Xi_{Lk};\lambda_{L_k})]*$$

$$\left|p_{brdf_{li_{L_k}}}(\Theta_S,\Xi_S;\Theta_{Lk},\Xi_{Lk};\lambda_{L_k};E_{L_k}) + p_{brdf_{re_{L_k}}}(\Theta_S,\Xi_S;\Theta_{Lk},\Xi_{Lk};\lambda_{L_k};E_{L_k})\right|$$

Des weiteren kann auch *eine Homogenitätssfunktion* gemäß folgenden *Gleichung 7 bis 9 berechnet werden:*

Gleichung 7:

$$H_{li}(\Theta_S,\Xi_S;\Theta_L,\Xi_L;E_L;\lambda_L) = \frac{\sum_{s=1}^{m-1}|I_{li_s}(\Theta_S,\Xi_S;\Theta_L,\Xi_L;E_L;\lambda_L) + I_{li_{s-1}}(\Theta_S,\Xi_S;\Theta_L,\Xi_L;E_L;\lambda_L)|}{m-1}$$

$$= \frac{1}{m-1}\{\ \sum_{k=1}^{n}[E_{L_k}(\Theta_{L_k},\Xi_{L_k};E_{L_k};\lambda_{L_k})]*$$

$$\sum_{s=1}^{m-1}|p_{brdf_{li_s}}(\Theta_S,\Xi_S;\Theta_{L_k},\Xi_{L_k};E_{L_k};\lambda_{L_k}) + p_{brdf_{li_{s-1}}}(\Theta_S,\Xi_S;\Theta_{L_k},\Xi_{L_k};E_{L_k};\lambda_{L_k})|\ \}$$

Hierin bedeutet:

H$_{li}$    Homogenitätsfunktion links von der Kante Ka

s    Die Nummer einer der Auswertelinien 14a, 14b .. 14g

m    Die Gesamtanzahl der Auswertelinien 14a,14b..14g

I$_{lis}$    Die Gesamtintensitätsfunktion gemäß Gleichung 3, allerdings nur für Bildpunkte auf den jeweiligen Auswertungslinien s, die links von der Kante Ka liegen

$p_{brdf\,lis}$    Die bidirektionale Reflektanzfunktion gemäß Gleichung 1, allerdings nur für Bildpunkte auf der jeweiligen Auswertungslinien s, die links von der Kante Ka liegen

Gleichung 8:

$$H_{re}(\Theta_S,\Xi_S;\Theta_L,\Xi_L;E_L;\lambda_L) = \frac{\sum_{s=1}^{m-1}\left|I_{re_s}(\Theta_S,\Xi_S;\Theta_L,\Xi_L;E_L;\lambda_L)+I_{re_{s-1}}(\Theta_S,\Xi_S;\Theta_L,\Xi_L;E_L;\lambda_L)\right|}{m-1}$$

$$= \frac{1}{m-1}\left\{\sum_{k=1}^{n}[E_{L_k}(\Theta_{L_k},\Xi_{L_k};E_{L_k};\lambda_{L_k})]^*\right.$$

$$\left.\sum_{s=1}^{m-1}\left|p_{brdf\,re_s}(\Theta_S,\Xi_S;\Theta_{L_k},\Xi_{L_k};E_{L_k};\lambda_{L_k})+p_{brdf\,re_{s-1}}(\Theta_S,\Xi_S;\Theta_{L_k},\Xi_{L_k};E_{L_k};\lambda_{L_k})\right|\right\}$$

H$_{re}$    Homogenitätsfunktion rechts von der Kante Ka

s    Die Nummer der einer der Auswertungslinien 14a, 14b .. 14g

m    Die Gesamtanzahl der Auswertungslinien 14a,14b..14g

I$_{re_s}$    Die Gesamtintensität gemäß Gleichung 4, allerdings nur für Bildpunkte auf der jeweiligen Auswertelinie s, die rechts von der Kante Ka liegen

p$_{brdf_{res}}$    Die bidirektionale Reflektanzfunktion gemäß Gleichung 1, allerdings nur für Bildpunkte auf der jeweiligen Auswertelinie s, die rechts von der Kante Ka liegen

Gleichung 9:

$$H(\Theta_S,\Xi_S;\Theta_L,\Xi_L;E_L;\lambda_L)= H_{li}(\Theta_S,\Xi_S;\Theta_L,\Xi_L;E_L;\lambda_L)+H_{re}(\Theta_S,\Xi_S;\Theta_L,\Xi_L;E_L;\lambda_L)$$

Hierin bedeuten:

H    die gesamte Homogenitätsfunktion

H$_{li}$    Homogenitätsfunktion links von der Kante Ka gemäß Gleichung 7

H$_{re}$    Homogenitätsfunktion rechts von der Kante Ka gemäß Gleichung 8

Es sei an dieser Stelle vorsorglich darauf hingewiesen, dass die Gleichungen 1 bis 4 der jeweils nur für einen Bildpunkt des Bildes 11 gelten. Obwohl die nachfolgende Auswertung gemäß Gleichungen 5 bis 9, die ja auf den Gleichungen 1 bis 4 aufbauen, prinzipiell mit solchen einzelnen Bildpunkten möglich wäre, werden die Auswertungen tatsächlich natürlich wegen der Streuungen der Farbwerte oder der Grauwerte innerhalb des Bildes 11 für eine Vielzahl von Bildpunkten auf den Auswertungslinien 14a..14g vorgenommen und diese Ergebnisse dann gemittelt, beispielsweise arithmetisch. Im Falle der Gleichungen 5 und 6 werden dazu zunächst die Funktionen der Gesamtintensität I$_{li}$ gemäß Gleichungen 1 und 3 für eine Vielzahl von Bildpunkten auf den Auswertungslinien 14a...14g links vom Kantenort vorgenommen und diese dann gemittelt. Analog werden danach die Funktionen der Gesamtintensität I$_{re}$ gemäß Gleichungen 2 und 4 für eine Vielzahl von Bildpunkten auf den Auswertungslinien 14a...14g rechts vom Kantenort vorgenommen und diese dann gemittelt. Mit diesen gemittelten Gesamtintensitäten kann dann gemäß der Beziehungen nach Gleichungen 5 und 6 die Kontrastfunktion und die Funktion der mittleren Intensität berechnet werden.

Für Gleichungen 7 bis 9 wird hierbei analog vorgegangen, wobei die Gesamtintensitäten $I_{li}$ und $I_{re}$ jeweils nur für die Bildpunkte jeweils einer Auswertungslinie s (Auswertungslinien 14a...14g) gemittelt werden.

Durch die Berechnung der Kontrastfunktion, der Funktion der mittleren Helligkeit und der Homogenitätsfunktion wurden also Parameter in Abhängigkeit einer Einflussgröße, nämlich der Helligkeit der Beleuchtungen 10a und 10b bestimmt. Allerdings sind diese Parameter noch nicht alle unmittelbar als Hilfsparameter verwendbar, da die Kontrastfunktion bei einem Optimum der Beleuchtungshelligkeiten ein Maximum aufweist, die Funktion der mittleren Helligkeit überhaupt kein Extremum aufweist und die Homogenitätsfunktion bei einem Optimum der Beleuchtungshelligkeiten ein Minimum aufweist. Damit die bestimmten Verläufe der Parameter als Hilfsparameter im Sinne der Erfindung weiterverwendet werden können, müssen diese so bestimmt werden, dass die Verläufe ein gleichartiges Extremum der funktionalen Abhängigkeit von der Einflussgröße besitzen, das heißt also, dass entweder alle Verläufe im Optimum der Beleuchtungshelligkeit ein Maximum aufweisen oder alle Verläufe im Optimum der Beleuchtungshelligkeit ein Minimum aufweisen. Damit dies möglich ist, kann ein gleichartigen Extremum der funktionalen Abhängigkeit von der Einflussgröße durch Differenzbildung eines ermittelten Wertes mit einem Vorgabewert erfolgen.

Für die Kontrastfunktion kann der Verlauf eines Hilfsparameters wie folgt bestimmt werden:

$$K_{max}\text{-}K(\Theta_S,\Xi_S\,;\Theta_L\,,\Xi_L;E_L;\lambda_L)$$

wobei $K_{max}$ der maximal möglichen Kontrast bezeichnet

Für die Funktion der mittleren Helligkeit kann der Verlauf eines Hilfsparameters wie folgt bestimmt werden:

$$(I_{max}/2)\text{-}\ \bar{I}(\Theta_S,\Xi_S;\Theta_L,\Xi_L;E_L;\lambda_L)$$

wobei $I_{max}$ die maximal mögliche Intensität bezeichnet

Für die Homogenitätsfunktion kann der Verlauf eines Hilfsparameters wie folgt bestimmt werden:

$$H(\Theta_S,\Xi_S\,;\Theta_L\,,\Xi_L;E_L;\lambda_L)$$

*Die für die Optimierung der Zielgrößen notwendigen Hilfsparameter,* wurden also *aus den Bildbereichen unter Verwendung der Parametermatrix $p_{bdrf}$ und der Beleuchtungskombinationen synthetisch ermittelt.*

In einem nächsten Schritt wird der Gesamtverlauf der Hilfsparameter in Abhängigkeit von der Einflussgröße Beleuchtungshelligkeit durch gewichtete Summation der Verläufe der Hilfsparameter bestimmt und in einem weiteren Schritt ein Extremum, hier also das Minimum dieses Gesamtverlaufes der Hilfsparameter ermittelt, wie dies rein schematisch gezeigt wird:

*Die* Formulierung der zu optimierenden Zielfunktion kann allgemein wie folgt formuliert werden:

$$F_K * (K_{max} - Kontrast) + F_I * |(I_{max}/2) - mittlereHelligkeit\,|$$
$$+ F_H * Homogenität \Rightarrow \min$$

*Mit den konkreten Verläufen der Hilfsparameter, die wie oben beschrieben ermittelt wurden wird das Optimierungskriterium wie folgt aufgestellt:*

$$F_K*(K_{max}-K(\Theta_S,\Xi_S\;;\Theta_L\,,\Xi_L;E_L;\lambda_L))+F_I((I_{max}/2)-\breve{I}(\Theta_S\,,\Xi_S\;;\Theta_L\,,\Xi_L\;;E_L\;;\lambda_L\,))+$$

$$F_H*\;H(\Theta_S,\Xi_S\;;\Theta_L\,,\Xi_L;E_L;\lambda_L)\;=> min$$

Hierin bedeuten:

$F_K$     Wertungsfaktor zur gewichteten Wertung des Hilfsparameters

$$(K_{max}-\;K(\Theta_S,\Xi_S\;;\Theta_L\,,\Xi_L;E_L;\lambda_L))$$

$F_I$     Wertungsfaktor zur gewichteten Wertung des Hilfsparameters

$$((I_{max}/2)-\;\breve{I}(\Theta_S\,,\Xi_S\;;\Theta_L\,,\Xi_L\;;E_L\;;\lambda_L\,))$$

$F_H$     Wertungsfaktor zur gewichteten Wertung des Hilfsparameters $H(\Theta_s,\Xi_s\;;\Theta_L,\Xi_L;E_L;\lambda_L)$

*Die Faktoren* $F_K$, $F_1$ *und* $F_H$ *dienen zur unterschiedlichen Wertung der Eigenschaften des Bildausschnittes. Diese Faktoren sind je nach dem angewendeten Kantenortskriterium wählbar. Das hier beschrieben Verfahren funktioniert bei jeder Art und Anzahl von Beleuchtungsquellen. Im Ergebnis der Optimierung erhält man die Einstellungen jeder einzelnen Lichtquelle oder einer Kombination von Lichtquellen.*

Die Bestimmung des Extremums, hier des Minimums, erfolgt nach den allseits aus der Mathematik bekannten verfahren. Beispielsweise kann das Simplexverfahren angewendet werden.

In einem letzten Schritt werden die zugehörigen Werte der Einflussgrößen, also die Beleuchtungshelligkeiten $E_{L_k}$ der Beleuchtungen 10a und 10b am Ort des bestimmten Extremums als Steuerinformation für diese Einflussgröße, also als einzustellende Beleuchtungshelligkeit bestimmt, wobei diese Beleuchtungshelligkeit gemäß dieser Steuerinformationen eingestellt wird.

In einer besonders vorteilhaften Ausgestaltung des Verfahrens kann die Aufnahme einer Bildsequenz von einer Kamera mit einer synchronisierten steuerbaren Beleuchtungsquelle erfolgen. Dabei wird zwischen den Bildern der Sequenz die Beleuchtungseinstellung geändert. Diese Vorgehensweise hat gegenüber dem oben beschriebenen Vorgehen den besonderen Vorteil, dass die Bildinformationen, die zur Ermittlung des Verlaufes der Hilfsparameter notwendig sind, sehr schnell aufgenommen werden können.

Eine weitere vorteilhafte Ausgestaltung *des hier beschriebenen Verfahrens zur Maximierung der Detektionssicherheit und Minimierung der Positionsabweichung ist* möglich, wenn die Bildinformationen über *die synthetische Erzeugung von Bildszenen durch Simulation* gewonnen werden. *Dazu ist die Kenntnis über die Reflexions- und Transmissionseigenschaften der Materialien, die Art des Kantenübergangs und die Beleuchtungsverhältnisse erforderlich.* In diesem Falle würden die Bildinformationen gemäß Figuren 3a und 4 simuliert und hieraus über die Methoden der Computersimulation der *Parametersatz der Reflexions- und Transmissionseigenschaften* $p_{bdrf}$, der auch als bidirektionale Reflektanzfunktion bezeichnet wird, rein rechnerisch ermittelt. *Dieses weitergebildete Verfahren bedient sich dann der bekannten Methoden der Computergrafik und der Optimierung. Bekannte Beleuchtungsmodelle der Computergrafik sind beispielsweise das Raytracing- und das Radiocity-Verfahren.*

### *Regelung des Fokus*

*Für eine korrekte Geometriebestimmung an dreidimensionalen Messobjekten ist neben der lateralen zweidimensionalen Bildinformation auch die Raumzuordnung über die Entfernungsinformation notwendig,* also des Abstandes zwischen der Videokamera und der Werkstückoberfläche. *Diese Abstandsinformation kann mit Hilfe von Fokusverfahren gewonnen werden.* Als Zielgröße dieser Optimierung ist deshalb der bestimmte Fokusort zu nennen. Eine wesentliche Einflussgröße ist die Linsenposition des Objektives 15 der Videokamera 5, mit der der Fokus verstellt werden kann. Zur Steuerung dieser Einflussgröße Linsenposition wurde in der Vergangenheit die Linsenposition des Objektives 15 der Videokamera 5 von einer Endposition zur anderen Endposition durchfahren und aus den hierbei aufgenommenen Bildinformationen die Verläufe von Hilfsparametern ermittelt, wobei diese Hilfsparameter als Fokuskriterien bezeichnet wurden. Aus einem festgestellten Extremum des Verlaufes eines solchen Hilfsparameters bzw. Fokuskriteriums wurde dann auf die geeignete Linsenposition geschlossen.

*Die in der Praxis eingesetzten* Verläufe von Hilfsparametern *bzw. Kriterien zur Fokussierung, wie* der Verlauf des *Kontrast*es, der Verlauf der *Grauwertdifferenzen oder* der Verlauf des *Mittelwert*es *und* der *Standardabweichung, sind stark von den Beleuchtungsverhältnissen und den optischen Eigenschaften der Messobjekte abhängig. Es ist deshalb ein sehr robustes Kriterium für alle Arten von Messobjekten notwendig, um eine einfache Bedienung der Geräte und ein sicheres Arbeiten automatischer Messabläufe zu ermöglichen.*

*Da jedoch jedes der Fokuskriterien* bzw. präziser gesagt, der Verlauf jedes der Fokuskriterien *mit einer unterschiedlichen Amplitudendifferenz auf das gleiche Messobjekt* bzw. Werkstück *anspricht, ist dies mit einem einzelnen Fokuskriterium nicht möglich.* Unter Amplitudendifferenz ist hierbei die maximale Änderung des Wertes des betreffenden Fokuskriteriums beim Durchfahren des Linsenposition des Objektives 15 von einer Endposition zur anderen Endposition zu verstehen.

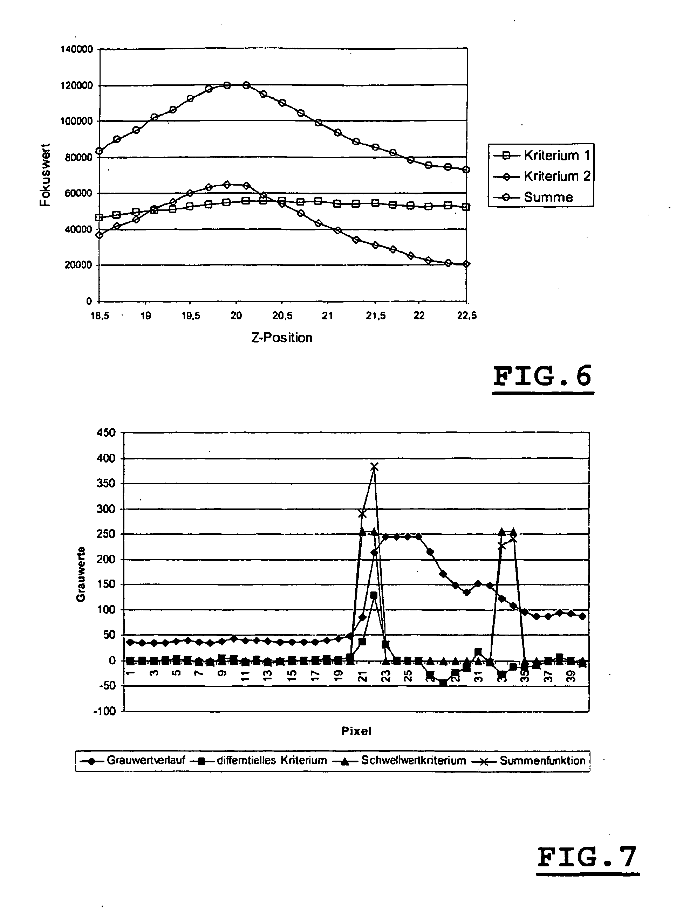

*Eine Alternative bietet die gewichtete Addition der* Verläufe der Hilfsparameter (Fokuskriterien) zu einem Gesamtverlauf der Hilfsparameter. *Die Ausprägung dieser Fokuskurve kann dabei sehr unterschiedlich sein,* wie dies beispielhaft aus Figur 6 ersichtlich ist. Wie hieraus zu sehen, sind hierin zwei Verläufe von Hilfsparametern eingezeichnet, die mit "Kriterium 1" und "Kriterium 2" bezeichnet sind. *Durch* eine solche *Kombination mehrerer* Verläufe von *Fokuskriterien* durch gewichtete Addition zu einem Gesamtverlauf, der in Figur 6 mit "Summe" bezeichnet ist, *kann ein universelles Ansprechen auf viele Messobjekte erreicht werden.* Wie nämlich aus Figur 6 zu sehen ist, weist der Verlauf des Hilfsparameters "Kriterium 1" nahezu keine Amplitudendifferenz auf, während der Verlauf des Hilfsparameters "Kriterium 2" eine relativ große Amplitudendifferenz aufweist. Durch gewichtete Summation erhält auch der Gesamtverlauf der Hilfsparameter, der in Figur 6 mit "Summe" bezeichnet ist, eine relativ große Amplitudendifferenz. Bei einem anderen Werkstück oder bei anderen Beleuchtungsverhältnissen ist es hingegen möglich, dass umgekehrt der Hilfsparameter "Kriterium 1" eine große Amplitudendifferenz aufweist, während der Hilfsparameter "Kriterium 2" nahezu keine Amplitudendifferenz aufweist. Durch die gewichtete Summation weist der Gesamtverlauf der Hilfsparameter dann jedoch trotz der völlig unterschiedlichen Verläufe der Hilfsparameter "Kriterium 1" und "Kriterium2" eine große auswertbare Amplitudendifferenz auf.

*Dadurch ist* also *eine robustere Detektion des Fokuszustandes möglich.*

Die zu optimierende Zielfunktion kann wie folgt definiert werden:

$$F_1 * \text{Fokuswert}_1 + F_2 * \text{Fokuswert}_2 + \ldots F_N * \text{Fokuswert}_N \Rightarrow \max$$

Hierin bedeuten:

Fokuswert$_1$ Verlauf eines ersten Hilfsparameters bzw. Fokuskriteriums (z.B. Kontrast) in Abhängigkeit von der Einflußgröße (z.B. Linsenposition des Objektives 15)

Fokuswert$_2$ Verlauf eines zweiten Hilfsparameters bzw. Fokuskriteriums (z.B. Grauwertdifferenz) in Abhängigkeit von der Einflußgröße (z.B. Linsenposition des Objektives 15)

Fokuswert$_N$ Verlauf eines letzten Hilfsparameters bzw. Fokuskriteriums in Abhängigkeit von der Einflußgröße (z.B. Linsenposition des Objektives 15)

$F_1$ Wichtungsfaktor zur gewichteten Wertung des Hilfsparameters Fokuswert$_1$

$F_2$ Wichtungsfaktor zur gewichteten Wertung des Hilfsparameters Fokuswert$_2$

$F_N$ Wichtungsfaktor zur gewichteten Wertung des Hilfsparameters Fokuswert$_n$

*Es bestehen* insbesondere *unterschiedliche Möglichkeiten, um die Wichtungsfaktoren* $F_1, F_2 .. F_n$ *für die Kriterien festzulegen. Beispielsweise könnte dies anhand der Materialien, des Kantentypes oder adaptiv anhand des Anstiegs der Fokusfunktionen der einzelnen Fokusverfahren erfolgen.*

Da über den Fokusort der Abstand zwischen der Videokamera 5 und der Oberfläche des Werkstückes 7 vorzugsweise am zu bestimmenden 2D-Strukturort gemessen werden soll, wird man zur Ermittlung der Fokuskriterien Bildpunkte rechts der Kante Ka verwenden, die auf der Werkstückoberfläche des Werkstückes 7 liegen und die sich im Bereich der Kante Ka, vorzugsweise auf einer zur Bestimmung des Strukturortes ausgewerteten Abtastungslinie (14a-14g) befinden.

### Objektiviertes Kantenortskriterium

*Kernaufgabe der optischen Präzisionsmesstechnik ist die genaue Lagebestimmung der optisch wirksamen Struktur und die Zuordnung zu den funktionsbestimmenden Körperkanten und Geometriemerkmalen*, sodass als Zielgröße auch hiefür der 2D-Strukturort oder wenn zusätzlich noch der Abstand zwischen Kamera und Werkstückoberfläche gemessen wird, der 3D-Strukturort festzulegen ist.

*Dazu stehen unterschiedliche* Hilfsparameter, hier als *Kantenortskriterien* bezeichnet, *wie beispielsweise differentielle, integrale und Schwellwertkriterien, zur Verfügung. Die Messunsicherheit jedes Kantenortskriteriums ist vom jeweiligen Intensitätsübergang abhängig. Die Einstellung des am besten geeigneten Kantenortskriteriums ist demzufolge mit viel Erfahrung des Messtechnikers verbunden. Auch hier sind robuste Antaststrategien und automatische Auswahlverfahren für Kantenortskriterien erforderlich, die auf unterschiedliche Objekte reagieren und sicher ansprechen. Wenn der Strukturort mit hoher Sicherheit gefunden wurde, kann im nächsten Schritt eine Präzisionsantastung mit Subpixelauflösung durchgeführt werden.*

Wie bereits oben ausgeführt treten *die Hauptprobleme der Detektion des Intensitätsübergangs bei Beleuchtung mit Auflicht auf. Diese Beleuchtungsart hebt die Strukturen auf der Oberfläche hervor, so dass keine symmetrischen Intensitätsverläufe entstehen. Dies wird durch starke Intensitätsschwankungen in den "hell"-Gebieten des Intensitätsverlaufs deutlich*, wie dies aus Figur 7 anhand der Kurve mit der Bezeichnung "Grauwertverlauf" deutlich wird. Dieser Grauwertverlauf könnte beispielsweise entlang einer Auswertungslinie 14b des Bildes 11 gemäß Figur 3b aufgenommen worden sein. Im Gegensatz zum obigen Beispiel, bei dem Einflussgrößen für die Beleuchtung ausgewertet wurden und deshalb die Bildpunkte im Übergangsbereich der Struktur nicht ausgewertet wurden, werden hier bei der Bestimmung des Strukturortes bzw. des Kantenortes der Kante Ka natürlich alle Bildpunkte der betreffenden Auswertungslinie 14b berücksichtigt, da sich der zu bestimmende 2D-Strukturort, also die Kantenort der Kante Ka ja genau in diesem Übergangsbereich der Kante Ka befindet.

*Aus diesem Grauwertverlauf wurde* der Verlauf mehrerer Hilfsparameter, die hier als Kantenortskriterien bezeichnet werden, bestimmt, nämlich *ein differentielles Kantenortskriterium und ein Schwellwertkriterium angewendet*. Als Einflussgröße wäre hierbei der potentielle Strukturort der Kante Ka zu nennen, der hier einem Ort bzw. einem Bildpunkt auf der Auswertungslinie 14b entspricht.

*Das differentielle Kantenortskriterium bildet die Grauwertdifferenzen*, also die Differenzen der Grauwerte nebeneinanderliegender Bildpunkte *und bestimmt folgend aus dem Betrag der Funktion den maximalen Anstieg*. Da der Grauwertverlauf ein relativ großes Rauschen aufweist, ist es *durch das Rauschen zufällig, wo die größte Grauwertdifferenz auftritt*, wie dies aus der Kurve mit der Bezeichnung "differentielles Kriterium" in Figur 7 ersichtlich *ist.Die Messunsicherheit für die Antastung wird dadurch größer.*

Das Schwellwertkriterium *bestimmt den Grauwert* der einzelnen Bildpunkte und selektiert in dem hier gezeigten Beispiel alle Bildpunkte, deren Grauwert *zwischen 100 und 128 GW liegt*. Für alle Bildpunkte, deren Grauwert zwischen 100 und 128 GW liegt, nimmt das Schwellwertkriterium den Wert 255 GW an, während für alle anderen Bildpunkte das Schwellwertkriterium den Wert 0 GW annimmt. Damit weist der Verlauf des Hilfsparameters "Schwellwertkriterum" einen digitalen Verlauf auf. Der Verlauf dieses Hilfsparameters ist in Figur 7 als Kurve mit der Bezeichnung "*Schwellwertkriterium"* abgebildet. *Infolge des Rauschens* der Grauwerte des Bildes (siehe Kurve "Grauwertverlauf" in Figur 7) *ist ebenfalls nicht immer eine eineindeutige Detektion des Kantenortes möglich.*

*Durch die* gewichtete *Addition der beiden Verläufe entsteht die* zu optimierende *Zielfunktion also der Gesamtverlauf der Hilfsparameter,* die in Figur 7 mit "Summenfunktion" bezeichnet ist. *Bei dieser ist die Detektion des maximalen Anstieges mit höherer Sicherheit möglich. In dem hier dargestellten Fall sind die Wichtungsfaktoren beide gleich eins.* Die hierbei zu optimierende Zielfunktion kann wie folgt formuliert werden:

$$F_1 * \text{Kantenortskriterium}_1 + F_2 * \text{Kantenortskriterium}_2 + ... + F_N * \text{Kantenortskriterium}_N \Rightarrow \max$$

Hierin bedeuten:

| | |
|---|---|
| Kantenortskriterium$_1$ | Verlauf eines ersten Hilfsparameters bzw. Kantenortskriteriums (z.B. differentielles Kantenortskriterium) in Abhängigkeit von der Einflußgröße (z.B. potentieller Strukturort) |
| Kantenortskriterium$_2$ | Verlauf eines zweiten Hilfsparameters bzw. Kantenortskriteriums (z.B. Schwellwertkriterium) in Abhängigkeit von der Einflußgröße (z.B. potentieller Strukturort) |
| Kantenortskriterium$_N$ | Verlauf eines letzten Hilfsparameters bzw. Fokuskriteriums in Abhängigkeit von der Einflußgröße (z.B. potentieller Strukturort) |
| $F_1$ | Wertungsfaktor zur gewichteten Wertung des Hilfsparameters Kantenortskriterium1 |
| $F_2$ | Wertungsfaktor zur gewichteten Wertung des Hilfsparameters Kantenortskriterium2 |
| $F_N$ | Wertungsfaktor zur gewichteten Wertung des Hilfsparameters Kantenortskriterium n |

*Die Festlegung der Wichtungsfaktoren* $F_1$, $F_2$,...$F_N$ *spielt in diesem Fall eine große Rolle. Am günstigsten*

*wäre eine adaptive Festlegung der Wichtungsfaktoren, sowie der Parameter der Kantenorskriterien.*

Durch eine Realisierung der im diesem Patent beschriebenen Verfahren kommt es zu einer entscheidenden Vereinfachung der optischen Antastung, weil die Beleuchtung, der Fokus und das Kantenortskriterium nicht mehr durch den Messtechniker eingestellt werden müssen.

Für die Gleichungen 1 bis 9 wurde hierbei nachfolgende Nomenklatur verwendet: mit $m>1$

| | |
|---|---|
| E | Beleuchtungsstärke |
| H | Homogenität |
| I | Helligkeit |
| Ia | Umgebungshelligkeit |
| K | Kontrast |
| L | Beleuchtungsstärke |
| li | Bereich links vom Strukturübergang bzw. der Kante K |
| re | Bereich rechts vom Strukturübergang bzw. der Kante K |
| S | Sensor |
| $\lambda$ | Wellenlänge |
| $\Theta$ | Azimutwinkel |
| $\Xi$ | Elevationswinkel |

**Patentansprüche**

1. Verfahren zur Optimierung wenigstens einer der Zielgrößen 2D-Strukturorte oder 3D-Strukturorte für die optische Präzisionsmesstechnik, wobei diese Zielgrößen durch die Einflussgrößen Helligkeit der Beleuchtung, Wellenlänge der Beleuchtung oder Ort der Beleuchtung beeinflusst werden, wobei das Verfahren folgende Schritte umfasst:

   a) eine Bildaufnahmevorrichtung (5) nimmt Bildinformationen eines zu vermessenden Werkstückes auf
   b) eine Bildverarbeitungsvorrichtung (9) gewinnt aus diesen Bildinformationen wenigstens zwei der folgenden Hilfsparameter Kontrast, Homogenität, mittlere Helligkeit oder Anstieg und leitet aus diesen Hilfsparametern Steuerinformationen für die besagten Einflussgrößen zur Steuerung der Helligkeit der Beleuchtung, zur Steuerung der Wellenlänge der Beleuchtung und/oder zur Steuerung des Ortes der Beleuchtung wie folgt ab: wählen von Hilfsparameters, deren Verläufe in Abhängigkeit von wenigstens einer Einfluss- größe ein gleichartiges Extrenum der funktionalen Abhängigkeit von diese, Einflussgröße aufweisen Bestimmung der Verläufe der Hilfsparameter in Abhängigkeit von dieser weingstens einen Einflussgröße

   - Bestimmung eines Gesamtverlaufes der Hilfsparameter in Abhängigkeit von der Einflussgröße durch gewichtete Summation der Verläufe der Hilfsparameter
   - Bestimmung eines Extremums des Gesamtverlaufes der Hilfsparameter
   - Ermittlung des zugehörigen Wertes der Einflussgröße am Ort des bestimmten Extremums als Steuerinformation für die Einflussgröße

2. Verfahren nach Anspruch 1 **gekennzeichnet dadurch, dass** zumindest einzelne der Hilfsparameter zum Erzielen eines gleichartigen Extremums der funktionalen Abhängigkeit von der Einflussgröße durch Differenzbildung eines ermittelten Wertes mit einem Vorgabewert gewonnen werden.

3. Verfahren nach einem der Ansprüche 1 bis 2 **gekennzeichnet dadurch, dass** die Wichtungsfaktoren für die gewichtete Summation der Verläufe der Hilfsparameter so bestimmt werden, dass eine Normierung aller Hilfsparameter erfolgt.

4. Verfahren nach einem der Ansprüche 1 bis 3 **gekennzeichnet dadurch, dass** die Bestimmung der Hilfsparameter aus Farbbildern oder Grauwertbildern erfolgt.

5. Verfahren nach einem der Ansprüche 1 bis 4, **gekennzeichnet dadurch, dass** zur Bestimmung des Verlaufes der Hilfsparameter zunächst eine bidirektionale Reflektanzfunktion (Pbdfr) bestimmt wird.

6. Verfahren nach Anspruch 5, **gekennzeichnet dadurch, dass** als Bildinformationen zur Ermittlung des Verlaufes der Hilfsparameter von einer Kamera eine Bildsequenz mit einer synchronisiert steuerbaren Belenchtungsquelle aufgenommen wird, wobei zwischen den Bildern die Beleuchtungseinstellung geändert wird.

**7.** Optisches Präzisionsmessgerät umfassend wenigstens eine Bildaufnahmevorrichtung (5) und eine zugeordnete Bildverarbeitungsvorrichtung (9), die zur Optimierung wenigstens einer der Zielgrößen 2D-Strukturorte oder 3D-Strukturorte eines Messablaufs eingerichtet ist, wobei diese Zielgrößen durch die Einflussgrößen Helligkeit der Beleuchtung, Wellenlänge der Beleuchtung oder Ort der Beleuchtung beeinflusst werden und wobei die Bildverarbeitungsvorrichtung (9) aus Bildinformationen (11) eines zu vermessenden Werkstückes (7) wenigstens zwei der folgenden Hilfsparameter Kontrast, Homogenität, mittlere Helligkeit oder Anstieg gewinnt und aus diesen Hilfsparametern Steuerinformationen für die Einflussgrößen zur Steuerung der Helligkeit der Beleuchtung, zur Steuerung der Wellenlänge der Beleuchtung und/oder zur Steuerung des Ortes der Beleuchtung ableitet wobei die Steuerinformationen in der Bildverarbeitungsvorrichtung wie folgt abgeleitet werden:

Wählen von Hilfsparametern, deren Verlaufe in Abhängigkeit von wenigstens einer Einflussgröße ein gleichartigen Extremun der funktionalen Abhängigkeit von dieser Einflussgröße aufweisen Bestimmung der Verläufe der Hilfsparameter in Abhängigkeit von dieser wenigstens einen Einflussgröße

- Bestimmung eines Gesamtverlaufes der Hilfsparameter in Abhängigkeit von der Einflussgröße durch gewichtete Summation der Verläufe der Hilfsparameter
- Bestimmung eines Extremums des Gesamtverlaufes der Hilfsparameter
- Ermittlung des zugehörigen Wertes der Einflussgröße am Ort des bestimmten Extremums als Steuerinformation für die Einflussgröße

**8.** Präzisionsmessgerät nach Anspruch 7, **dadurch gekennzeichnet, dass** das Präzisionsmessgerät ein Koordinatenmessgerät ist, in dem die Bildaufnahmevorrichtung (5) an einer Mechanik (2,3,4) befestigt ist, über die die Bildaufnahmevorrichtung (5) relativ zu einem zu vermessenden Werkstück in den drei Koordinatenrichtungen (x,y, z) bewegt werden kann.

**9.** Präzisionsmessgerät nach Anspruch 7 oder 8, **gekennzeichnet dadurch, dass** die Bildverarbeitungsvorrichtung zumindest einzelne der Hilfsparameter zum Erzielen eines gleichartigen Extremums der funktionalen Abhängigkeit von der Einflussgröße durch Differenzbildung eines ermittelten Wertes mit einem Vorgabewert gewinnt.

**10.** Präzisionsmessgerät nach einem der Ansprüche 7 bis 9, **gekennzeichnet dadurch, dass** die Bildverarbeitungsvorrichtung die Wichtungsfaktoren für die gewichtete Summation der Verläufe der Hilfsparameter so bestimmt, dass eine Normierung aller Hilfsparameter, erfolgt.

**11.** Präzisionsmessgerät nach einem der Anspruche 7 bis 10, **gekennzeichnet dadurch, dass** die Bildverarbeitungsvorrichtung die Bestimmung der Hilfsparameter aus jeder Art von Farbbildern oder Grauwertbildern vornimmt.

**12.** Präzisionsmessgerät nach Anspruch 7 bis 11, **gekennzeichnet dadurch, dass** zur Bestimmung des Verlaufes der Hilfsparameter zunächst eine bidirektionale Reflektanzfunktion ($P_{bdfr}$) bestimmt wird.

**13.** Präzisionsmessgerät nach Anspruch 12, **gekennzeichnet dadurch, dass** als Bildinformationen zur Ermittlung des Verlaufes der Hilfsparameter von einer Kamera eine Bildsequenz mit einer synchronisiert steuerbaren Beleuchtungsquelle aufgenommen wird, wobei zwischen den Bildern die Beleuchtungseinstellung geändert wird.

**Claims**

**1.** Method for optimizing at least one of the target variables of 2D structural locations or 3D structural locations for optical precision measurement technology, these target variables being influenced by the influencing variables of brightness of the illumination, wavelength of the illumination or location of the illumination, the method comprising the following steps:

a) an image pick-up device (5) picks up image information of a workpiece to be measured, and
b) an image processing device (9) obtains from this image information at least two of the following auxiliary parameters of contrast, homogeneity, average brightness or rise, and derives from these auxiliary parameters control information for said influencing variables in order to control the brightness of the illumination, to control the wavelength of the illumination and/or to control the location of the illumination, as follows:

- selecting auxiliary parameters whose profiles have, as a function of at least one influencing variable, a similar extreme of the functional dependence on this influencing variable,

- determining the profiles of the auxiliary parameters as a function of this at least one influencing variable,
- determining an overall profile of the auxiliary parameters as a function of the influencing variable by means of weighted summation of the profiles of the auxiliary parameters,
- determining an extreme of the overall profile of the auxiliary parameters, and
- ascertaining the associated value of the influencing variable at the location of the specific extreme as control information for the influencing variable.

2. Method according to Claim 1, **characterized in that**, in order to obtain a similar extreme of the functional dependence on the influencing variable, at least individual auxiliary parameters are obtained by forming the difference between an ascertained value and a default value.

3. Method according to one of Claims 1 to 2, **characterized in that** the weighting factors for the weighted summation of the profiles of the auxiliary parameters are determined in such a way that all the auxiliary parameters are normalized.

4. Method according to one of Claims 1 to 3, **characterized in that** the auxiliary parameters are determined from colour images or grey scale images.

5. Method according to one of Claims 1 to 4, **characterized in that**, in order to determine the profile of the auxiliary parameters, a bidirectional reflectance function ($P_{bdfr}$) is firstly determined.

6. Method according to Claim 5, **characterized in that,** as image information for ascertaining the profile of the auxiliary parameters, a camera picks up an image sequence with the aid of synchronized controllable illumination source, the illumination setting being changed between the images.

7. Optical precision measurement unit comprising at least an image pick-up device (5) and an assigned image processing device (9) which is set up to optimize at least one of the target variables of 2D structural locations or 3D structural locations of a measurement sequence, in which these target variables are influenced by the influencing variables of brightness of the illumination, wavelength of the illumination or location of the illumination, and in which the image processing device (9) obtains from image information (11) of a workpiece (7) to be measured at least two of the following auxiliary parameters of contrast, homogeneity, average brightness or rise, and derives from these auxiliary parameters control information for the influencing variables in order to control the brightness of the illumination, to control the wavelength of the illumination and/or to control the location of the illumination, the control information being derived in the image processing device as follows:

   - selecting auxiliary parameters whose profiles have, as a function of at least one influencing variable, a similar extreme of the functional dependence on influencing variable,
   - determining the profiles of the auxiliary parameters as a function of this at least one influencing variable,
   - determining an overall profile of the auxiliary parameters as a function of the influencing variable by means of weighted summation of the profiles of the auxiliary parameters,
   - determining an extreme of the overall profile of the auxiliary parameters, and
   - ascertaining the associated value of the influencing variable at the location of the specific extreme as control information for the influencing variable.

8. Precision measurement unit according to Claim 7, **characterized in that** the precision measurement unit is a coordinate measuring machine in which the image pick-up device (5) is fastened on a mechanism (2, 3, 4) via which the image pick-up device (5) can be moved in the three coordinate directions (x, y, z) relative to a workpiece to be measured.

9. Precision measurement unit according to Claim 7 or 8, **characterized in that**, in order to obtain a similar extreme of the functional dependence on the influencing variable, the image processing device obtains at least individual auxiliary parameters by forming the difference between an ascertained value and a default value.

10. Precision measurement unit according to one of Claims 7 to 9, **characterized in that** the image processing device determines the weighting factors for the weighted summation of the profiles of the auxiliary parameters in such a way that all the auxiliary parameters are normalized.

11. Precision measurement unit according to one of Claims 7 to 10, **characterized in that** the image processing device determines the auxiliary parameters from all types of colour images or grey scale images.

12. Precision measurement unit according to Claims 7 to 11, **characterized in that**, in order to determine the profile of the auxiliary parameters, a bidirectional reflectance function ($P_{bdfr}$) is firstly determined.

13. Precision measurement unit according to Claim 12, **characterized in that,** as image information for ascertaining the profile of the auxiliary parameters, a camera picks up an image sequence with the aid of a synchronized controllable illumination source, the illumination setting being changed between the images.

**Revendications**

1. Procédé pour optimiser au moins l'une des grandeurs ciblées Lieux structurels 2D ou Lieux structurels 3D pour la technique de mesure de précision optique, ces grandeurs ciblées étant influencées par les grandeurs d'influence Luminosité de l'éclairage, Longueur d'onde de l'éclairage ou Lieu de l'éclairage, le procédé comprenant les étapes suivantes :

   a) un dispositif d'acquisition d'image (5) enregistre des informations d'image d'une pièce à mesurer
   b) un dispositif de traitement d'image (9) obtient au moins deux des paramètres auxiliaires suivants à partir de ces informations d'image : contraste, homogénéité, luminosité moyenne ou rampe et déduit de ces paramètres auxiliaires des informations de commande pour lesdites grandeurs d'influence en vue de commander la luminosité de l'éclairage, de commander la longueur d'onde de l'éclairage et/ou de commander le lieu de l'éclairage de la manière suivante :

      - Sélection des paramètres auxiliaires dont les courbes en fonction d'au moins une grandeur d'influence présentent un extrême de même type de la dépendance fonctionnelle de cette grandeur d'influence,
      - Détermination des courbes des paramètres auxiliaires en fonction de cette au moins une grandeur d'influence,
      - Détermination d'une courbe globale des paramètres auxiliaires en fonction de la grandeur d'influence par addition pondérée des courbes des paramètres auxiliaires,
      - Détermination d'un extrême de la courbe globale des paramètres auxiliaires
      - Détermination de la valeur correspondante des grandeurs d'influence à l'endroit de l'extrême déterminé en tant qu'information de commande pour la grandeur d'influence.

2. Procédé selon la revendication 1, **caractérisé en ce qu'**au moins quelques-uns des paramètres auxiliaires sont obtenus, pour obtenir un extrême de même type de la dépendance fonctionnelle de la grandeur d'influence, par calcul de la différence entre une valeur déterminée et une valeur prédéfinie.

3. Procédé selon l'une des revendications 1 à 2, **caractérisé en ce que** les facteurs de pondération pour l'addition pondérée des courbes des paramètres auxiliaires sont déterminés de manière à obtenir une normalisation de tous les paramètres auxiliaires.

4. Procédé selon l'une des revendications 1 à 3, **caractérisé en ce que** la détermination des paramètres auxiliaires s'effectue à partir d'images en couleur ou d'images en niveaux de gris.

5. Procédé selon l'une des revendications 1 à 4, **caractérisé en ce qu'**une fonction de réflectivité bidirectionnelle (Pbdfr) est tout d'abord déterminée pour déterminer la courbe des paramètres auxiliaires.

6. Procédé selon la revendication 5, **caractérisé en ce que** les informations d'image destinées à déterminer la courbe des paramètres auxiliaires sont une séquence d'images enregistrée par une caméra avec une source d'éclairage pouvant être commandée de manière synchronisée, le réglage de l'éclairage étant modifié entre les images.

7. Appareil optique de mesure de précision comprenant au moins un dispositif d'acquisition d'image (5) et un dispositif de traitement d'image (9) associé, lequel est conçu pour optimiser au moins l'une des grandeurs ciblées Lieux structurels 2D ou Lieux structurels 3D d'une opération de mesure, ces grandeurs ciblées étant influencées par les grandeurs d'influence Luminosité de l'éclairage, Longueur d'onde de l'éclairage ou Lieu de l'éclairage et le dispositif de traitement d'image (9) obtenant à partir des informations d'image (11) d'une pièce à mesurer (7) au moins deux des paramètres auxiliaires suivants : contraste, homogénéité, luminosité moyenne ou rampe et déduisant de ces paramètres auxiliaires des informations de commande pour lesdites grandeurs d'influence en vue de commander la luminosité de l'éclairage, de commander la longueur d'onde de l'éclairage et/ou de commander le lieu de l'éclairage, les informations de commande étant déduites comme suit dans le dispositif de traitement d'image :

- Sélection des paramètres auxiliaires dont les courbes en fonction d'au moins une grandeur d'influence présentent un extrême de même type de la dépendance fonctionnelle de cette grandeur d'influence,
- Détermination des courbes des paramètres auxiliaires en fonction de cette au moins une grandeur d'influence,
- Détermination d'une courbe globale des paramètres auxiliaires en fonction de la grandeur d'influence par addition pondérée des courbes des paramètres auxiliaires,
- Détermination d'un extrême de la courbe globale des paramètres auxiliaires,
- Détermination de la valeur correspondante des grandeurs d'influence à l'endroit de l'extrême déterminée en tant qu'information de commande pour la grandeur d'influence.

8. Appareil de mesure de précision selon la revendication 7, **caractérisé en ce que** l'appareil de mesure de précision est un appareil de mesure de coordonnées dans lequel le dispositif d'acquisition d'image (5) est fixé à un mécanisme (2, 3, 4) par le biais duquel le dispositif d'acquisition d'image (5) peut être déplacé dans les trois directions de coordonnées (x, y, z) par rapport à une pièce à mesurer.

9. Appareil de mesure de précision selon la revendication 7 ou 8, **caractérisé en ce que** le dispositif de traitement d'image obtient au moins quelques-uns des paramètres auxiliaires, pour obtenir un extrême de même type de la dépendance fonctionnelle de la grandeur d'influence, par calcul de la différence entre une valeur déterminée et une valeur prédéfinie.

10. Appareil de mesure de précision selon l'une des revendications 7 à 9, **caractérisé en ce que** le dispositif de traitement d'image détermine les facteurs de pondération pour l'addition pondérée des courbes des paramètres auxiliaires de manière à obtenir une normalisation de tous les paramètres auxiliaires.

11. Appareil de mesure de précision selon l'une des revendications 7 à 10, **caractérisé en ce que** le dispositif de traitement d'image effectue la détermination des paramètres auxiliaires à partir d'images en couleur ou d'images en niveaux de gris de tous types.

12. Appareil de mesure de précision selon l'une des revendications 7 à 11, **caractérisé en ce qu'**une fonction de réflectivité bidirectionnelle ($P_{bdfr}$) est tout d'abord déterminée pour déterminer la courbe des paramètres auxiliaires.

13. Appareil de mesure de précision selon la revendication 12, **caractérisé en ce que** les informations d'image destinées à déterminer la courbe des paramètres auxiliaires sont une séquence d'images enregistrée par une caméra avec une source d'éclairage pouvant être commandée de manière synchronisée, le réglage de l'éclairage étant modifié entre les images.

**FIG.1**

**FIG.2**

**FIG.3a**

**FIG.3b**

Links          Übergang          Rechts

normierter Grauwert

x in Pixel

**FIG.4**

**FIG.5**

**FIG.6**

**FIG.7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0566307 A2
- EP 0606018 A1
- DE 3420359 C2
- EP 0016122 A1

**In der Beschreibung aufgeführte Nicht-Patentliteratur**

- **UWE NEHSE.** Koordinatenmessung. Tectum Verlag Marburg, 2001